# EUROPÄISCHE PATENTSCHRIFT

(11) **EP 2 389 256 B1**
(45) Veröffentlichungstag und Bekanntmachung des Hinweises auf die Patenterteilung: **20.03.2013**
(21) Anmeldenummer: 10701109.0
(22) Anmeldetag: 06.01.2010
(51) Int. Cl.: B05D 7/14, C08J 5/18, C09D 123/14, C09J 7/02, B32B 15/08, B32B 27/32, C09J 123/20

(54) **VERFAHREN ZUR KORROSIONSSCHUTZBEHANDLUNG**
METHOD FOR CORROSION PROTECTION TREATMENT
PROCÉDÉ DE TRAITEMENT ANTICORROSIF

(30) Priorität: 20.01.2009 DE 102009005517
(43) Veröffentlichungstag der Anmeldung: 30.11.2011
(73) Patentinhaber: TESA SE, 20253 Hamburg (DE)
(72) Erfinder: MÜSSIG, Bernhard, 21218 Seevetal (DE); SEIBERT, Matthias, 22529 Hamburg (DE); STROMANN, Michael, 1054 Budapest (HU)
(86) Internationale Anmeldenummer: PCT/EP2010/050069
(87) Internationale Veröffentlichungsnummer: WO 2010/084031

(56) Entgegenhaltungen:
- EP-A2- 2 011 845
- WO-A1-2009/133175
- DE-A1-102007 007 617
- US-A- 5 985 435
- US-A1- 2002 011 308

## Beschreibung

Die vorliegende Erfindung betrifft ein Verfahren zur Korrosionsschutzbehandlung von Metalloberflächen mit den Merkmalen des Oberbegriffs von Anspruch 1.

Metallbauteile werden in vielfältigen Bereichen eingesetzt. Dabei werden sie den unterschiedlichsten Witterungsbedingungen ausgesetzt, so dass oftmals eine Korrosionsschutzbehandlung erforderlich ist. Hierzu sind insbesondere für einen vollflächigen Auftrag einer Korrosionsschutzschicht auf Metallbauteile verschiedene Verfahren bekannt. Die DE 10 2006 006 910 B3 offenbart beispielsweise ein Verfahren, bei dem auf die zu schützenden Metalloberflächen eine Korrosionsschutzschicht in Form einer Zinklamellenbeschichtung aufgebracht wird. Die Aufbringung der Zinklamellenbeschichtung erfolgt mittels eines Tauch- oder Sprühverfahrens. Bei einem weiteren aus dem Stand der Technik bekannten Verfahren erfolgt eine Korrosionsschutzbehandlung durch Eintauchen der Metalloberflächen in einen kathodisch abscheidbaren Elektrotauchlack (DE 10 2005 059 314 A1). Den beiden zuvor genannten Verfahren ist gemeinsam, dass die Korrosionsschutzschicht auf eine relativ große Fläche, insbesondere vollflächig, auf die zu behandelnde Metalloberfläche aufgebracht wird.

Insbesondere in der Automobilindustrie besteht jedoch die Notwendigkeit, auch kleine Flächen, nämlich die Oberfläche von Kanten und Übergängen von Metallbauteilen, vor Korrosion durch eine Korrosionsschutzschicht zu schützen. Hierzu wird in der Regel eine Feinnahtabdichtung manuell oder mittels eines Roboters aufgebracht. Als Material für die Feinnaht wird üblicherweise pumpbares PVC-Plastisol verwendet. Dieses wird lokal auf die Metalloberfläche aufgesprüht und anschließend mittels eines Pinsels glatt gestrichen. Bei diesem Verfahren, das grundsätzlich für Kanten und Übergänge geeignet ist, ist es schwierig, die Feinnaht in der im Fahrzeugbau erforderlichen optischen Güte zu erstellen. Vielmehr bleibt die Oberfläche oftmals rau und ein ungleichmäßiger Auftrag ist mit bloßem Auge erkennbar. Darüber hinaus ist nicht sichergestellt dass der Auftrag vollständig ist um einen vollständigen Schutz gegen Korrosion zu gewährleisten.

Der vorliegenden Erfindung liegt daher das Problem zugrunde, ein Verfahren zur Korrosionsschutzbehandlung von Metalloberflächen anzugeben, das ohne großen Aufwand durchführbar und insbesondere auch zum Schutz von Kanten und Übergängen von Metallbauteilen eingesetzt werden kann.

Das zuvor aufgezeigte Problem wird mit einem Verfahren zur Korrosionsschutzbehandlung von Metalloberflächen mit den Merkmalen des Oberbegriffs von Anspruch 1 durch die Merkmale des kennzeichnenden Teils von Anspruch 1 gelöst. Eine nebengeordnete Lösung stellt eine Verwendung eines Klebebandes gemäß Anspruch 11 dar. Vorteilhafte Ausgestaltungen und Weiterbildungen sind Gegenstand der jeweiligen Unteransprüche.

Erfindungsgemäß wurde erkannt, dass ein Klebeband mit einer schmelzbaren speziellen polyolefinischen Schicht bei entsprechendem Verfahren eine gute Korrosionsschutzschicht auf Metalloberflächen ausbilden kann und demgemäß zur Korrosionsschutzbehandlung geeignet ist. Bei Versuchen konnte zudem gezeigt werden, dass mittels geeigneter selbstklebender Rezepturen glatte Oberflächen ausgebildet werden können. Derartige glatte Oberflächen weisen für einen Betrachter mit bloßem Auge eine gleichmäßige Oberflächenstruktur auf und sind dabei eben. Die Verwendung eines solchen Klebebandes zur Ausbildung einer Korrosionsschutzschicht auf Metalloberflächen ist wegen der einfachen Handhabung besonders vorteilhaft. Aufgrund der selbstklebenden Wirkung kann die schmelzbare Schicht besonders einfach auf die Oberflächen aufgebracht und dort vor weiteren Prozessschritten vorfixiert werden. Auch ist ein derartiges Design insbesondere zur Anwendung auf kleinen Flächen geeignet.

Bei dem erfindungsgemäßen Verfahren wird das Klebeband auf die jeweilige Metalloberfläche aufgebracht und anschließend erwärmt. Bei der Schicht handelt es sich um ein derartiges Material, welches durch Erwärmung aufschmilzt, sich bei Erwärmung auf der Metalloberfläche verteilt, in Fugen einfließen kann und dabei eine geschlossene und in der Regal glatte Korrosionsschutzschicht ausbildet. In einer Ausführungsform kann das Klebeband auch schon vor dem Aufbringen auf die Metalloberfläche so erwärmt sein, dass die Schicht geschmolzen ist.

Demgemäß betrifft die Erfindung ein Verfahren zur Korrosionsschutzbehandlung von Metalloberflächen, insbesondere an Kanten und Übergängen der Metallbauteile, durch Aufbringung eines Klebebandes mit einer Schicht aus einem Olefinpolymer mit einer Dichte zwischen 0,86 und 0,91 g/cm³ und einem Kristallitschmelzpunkt von mindestens 105 °C auf die Metalloberfläche und durch Erwärmung derart, dass die Schicht aufgeschmolzen wird und sich so eine Korrosionsschutzschicht ausbildet. Der Begriff Klebeband umfasst nicht nur die Rollenform sondern auch Abschnitte, Stanzlinge, Etiketten und andere Darreichungsformen. Unter Metalloberfläche wird nicht nur elementares Metall verstanden sondern die Oberfläche kann durch Aufrauung, Grundierung, Rostschutzbehandlung wie Kathodentauchlackierung oder andere übliche Veredlungsverfahren behandelt sein. Eine bevorzugte Form des Verfahrens ist die Abdichtung von Fugen von Automobilkarosserien.

Dem Fachmann galten Olefinpolymere für Klebmasse als ungeeignet. Dennoch können überraschenderweise aus Olefinpolymeren mit einer Dichte zwischen 0,86 und 0,91 g/cm³, vorzugsweise zwischen 0,86 und 0,88 g/cm³, besonders bevorzugt zwischen 0,86 und 0,87 g/cm³, und einem Kristallitschmelzpunkt von mindestens 105 °C, vorzugsweise mindestens 115 °C, besonders bevorzugt mindestens 135 °C, Klebmassen für Klebebänder mit hervorragenden Klebeigenschaften hergestellt werden. Eine solche Klebmasse beinhaltet also gleichzeitig die Eigenschaften eines Klebebandes, als auch die einer schmelzbaren Schicht welche nach Erwärmung die Korrosionsschutzschicht ausbildet.

In einer anderen Ausführungsform ist die schmelzbare Schicht zur Fixierung auf der Metalloberfläche mit einer Haftklebemasse vorzugsweise auf Basis von Polyacrylaten ausgerüstet. Dies ist insbesondere von Vorteil, wenn die schmelzbare Schicht bei Applikationstemperatur nicht hinreichend haftet. Für den Fachmann war es überraschend, dass die Verwendung eines Klebebandes mit einer Schicht aus schmelzbarem weichem Polyolefin eine viskoelastische Korrosionsschutzschicht ausbildet, welche der Auftragung einer Plastisolpaste von der Einfachheit des Verfahrens und der technischen Eigenschaften überlegen ist.

Das Klebeband ist für Transport, Lagerung oder Stanzung vorzugsweise mindestens einseitig mit einem Liner versehen, also zum Beispiel einer silikonbeschichteten Folie oder einem Silikonpapier.

Das erfindungsgemäße Olefinpolymer weist vorzugsweise einen Schmelzindex von weniger als 8 g/10 min, besonders bevorzugt weniger als 1,5 g/10 min auf. Der Biegemodul des Olefinpolymers beträgt vorzugsweise weniger als 50 MPa, besonders bevorzugt weniger als 26 MPa und insbesondere weniger als 17 MPa.

Das Olefinpolymer ist zum Beispiel ein Polypropylenharz, welches auf verschiedene Weise aufgebaut worden sein kann zum Beispiel als Blockcopolymer, als Pfropfpolymer oder als sogenannter Reaktorblend wie bei heterophasischen Polypropylenen (auch Impact Polypropylen oder - nicht ganz richtig aber üblich - Polypropylenblockcopolymer genannt). Das Polypropylenharz ist kein klassisches nicht-heterophasisches Polypropylenrandomcopolymer, welches die Monomere Propylen und das weitere Olefin (zum Beispiel Ethylen oder Buten) statistisch verteilt enthält, da diese Polymere nur geringe Scherfestigkeiten, Klebkräfte und Wärmebeständigkeiten erreichen können. Das Polypropylenharz ist vorzugsweise ein Blockcopolymer, ein Pfropfpolymer oder ein heterophasisches Polypropylen. Ein heterophasisches Polypropylen darf jedoch in der kristallinen Komponente geringe Mengen eines Comonomers enthalten, soweit der Kristallitschmelzpunkt noch im erfindungsgemäßen Bereich liegt. Polypropylenharz kann auch ein Homopolymer sein, wenn die geforderten technischen Eigenschaften durch Steuerung der Taktizität erreicht werden. Das Olefinpolymer kann als Hauptkomponente auch Ethylen oder Buten anstelle von Propylen enthalten.

Das Olefinpolymer enthält vorzugsweise Ethylen oder Propylen und mindestens ein weiteres Comonomer ausgewählt aus den C₂- bis C₁₀-Olefinen, besonders bevorzugt C₂-bis C₁₀-α-Olefinen. Besonders geeignet sind Copolymere aus Ethylen und Propylen, Ethylen und Buten-(1), Ethylen und Octen-(1), Propylen und Buten-(1) oder ein Terpolymer aus Ethylen, Propylen und Buten-(1).

Die Dichte des Polyolefins wird nach ISO 1183 ermittelt und in g/cm³ ausgedrückt. Der Schmelzindex wird nach ISO 1133 und 2,16 kg geprüft und in g/10 min ausgedrückt. Die Prüftemperatur beträgt wie dem Fachmann geläufig bei Propylen-basierten Polyolefinen 230 °C und Ethylen-basierten Polymeren 190 °C. Der Biegemodul (flexural modulus) ist nach ASTM D 790 (Sekantenmodul bei 2 % Dehnung) zu bestimmen. Der Kristallitschmelzpunkt (T_{cr}) und die Schmelzwärme werden mit DSC (Mettler DSC 822) bei einer Aufheizrate von 10 °C/min nach ISO 3146 ermittelt, beim Auftreten mehrerer Schmelzpeaks wird der mit der höchsten Temperatur gewählt, da bei Harz- oder Weichmachermodifizierung nur Schmelzpeaks oberhalb von 100 °C in Formulierungen erhalten bleiben und wirksam werden, wohingegen Schmelzpeaks erheblich unter 100 °C nicht erhalten bleiben und keine Auswirkung auf die Produkteigenschaften haben. Die Auswahl des Kristallitschmelzpunktes ist von Bedeutung, da die Schicht bei der verfahrensgemäßen Erwärmung schmelzen muss, aber das Fertigteil mit der Korrosionsschicht auch eine hinreichende Wärmebeständigkeit bei Gebrauchstemperatur aufweisen soll. Die Schmelzwärme des Olefinpolymers bestimmt einerseits die elastischen und plastischen Eigenschaften der Schicht und andererseits das Schmelzverhalten in der Wärme, sie liegt vorzugsweise zwischen 3 und 15 J/g, besonders bevorzugt zwischen 5 und 18 J/g.

Es stellte sich heraus, dass das Olefinpolymer erhebliche Mengen (über 100 phr) an Klebharz aufnehmen kann. Durch das Klebharz können nicht nur Klebeigenschaften der Schicht zur Metalloberfläche, sondern auch zu nachfolgenden Plastisol- oder Lackschichten beeinflusst werden. Ferner können durch Harze das Schmelzverhalten der Schicht sowie die dynamisch-mechanische Eigenschaften der Korrosionsschutzschicht eingestellt werden.

Die Menge an Klebharz beträgt vorzugsweise 50 bis 300 phr, besonders bevorzugt 100 bis 200 phr (phr bedeutet Gewichtsteile bezogen auf 100 Gewichtsteile Resin bzw. Rubber, das heißt hier Olefinpolymer). Die Polydispersität des Klebharzes ist das Verhältnis von Gewichtsmittel zu Zahlenmittel der Molmassenverteilung und kann durch Gelpermeationschromatographie ermittelt werden. Neben der Harzmenge spielt Polydispersität für die Eigenschaften eine wichtige Rolle. Als Klebharz werden daher solche mit einer Polydispersität von weniger als 2,1, vorzugsweise weniger als 1,8, besonders bevorzugt weniger als 1,6 eingesetzt. Eine weitere Einflüssgröße ist der Schmelzpunkt des Klebharzes (Bestimmung nach DIN ISO 4625).

Als Klebharz hat sich herausgestellt, dass Harze auf Basis von Kolophonium (zum Beispiel Balsamharz) oder Kolophoniumderivaten (zum Beispiel disproportioniertes, dimerisiertes oder verestertes Kolophonium), vorzugsweise partiell oder vollständig hydriert, gut geeignet sind. Terpenphenolharze zeichnen sich wie die hydrierten Harze durch eine besonders hohe Alterungsbeständigkeit aus. Bevorzugt werden ebenfalls Kohlenwasserstoffharze, die vermutlich aufgrund Ihrer Polarität gut verträglich sind. Dies sind zum Beispiel aromatische Harze wie Cumaron-Inden-Harze oder Harze auf Basis Styrol oder α-Methylstyrol oder cycloaliphatische Kohlenwasserstoffharze aus der Polymerisation von C₅-Monomeren wie Piperylen aus oder C₅- oder C₉-Fraktionen von Crackern oder Terpenen wie ß-Pinen oder δ-Limonen oder Kombinationen hiervon, vorzugsweise partiell oder vollständig hydriert, und Kohlenwasserstoffharze gewonnen durch Hydrierung von aromatenhaltigen Kohlenwasserstoffharzen oder Cyclopentadien-Polymeren.

Die erfindungsgemäße Schicht enthält zur Einstellung der gewünschten Eigenschaften vorzugsweise einen flüssigen Weichmacher wie beispielsweise aliphatische (paraffinische oder verzweigte) und cycloaliphatische (naphthenische) Mineralöle, Ester der Adipin-, Phthal-, Trimellit- und Zitronensäure, Wachse wie Wollwachs, flüssige Kautschuke (zum Beispiel niedermolekulare Nitril-, Butadien- oder Polyisoprenkautschuke), flüssige Polymerisate aus Isobutenhomopolymer und/oder Isobuten-Buten-Copolymer, Flüssig- und Weichharze mit einem Schmelzpunkt unter 40 °C auf Basis der Rohstoffe von Klebharzen, insbesondere der oben aufgeführten Klassen an Klebharz. Besonders bevorzugt werden flüssige Polymerisate aus Isobuten und/oder Buten, Mineralöle und Ester wie sie für PVC-Plastisolbeschichtungen eingesetzt werden.

Zur Optimierung der Eigenschaften der Schicht kann diese weitere Additive wie Füllstoffen, Pigmenten, Antioxidantien oder Vernetzungsmitteln enthalten. Geeignete Füllstoffe und Pigmente sind beispielsweise Zinkoxid, Titandioxid, Calciumcarbonat, Zinkcarbonat, Silicate und Kieselsäure.

Die Herstellung der erfindungsgemäßen Schicht kann aus Lösung sowie aus der Schmelze erfolgen. Bevorzugte Herstell- und Verarbeitungsverfahren erfolgen aus der Schmelze. Für den letzteren Fall umfassen geeignete Herstellprozesse sowohl Batchverfahren als auch kontinuierliche Verfahren. Besonders bevorzugt ist die kontinuierliche Fertigung mit Hilfe eines Extruders und anschließender Beschichtung direkt auf einem Liner mit oder ohne Klebmasseschicht.

Zur Optimierung der Haftung zwischen der erfindungsgemäßen Schicht und gegebenenfalls nachfolgender Plastisol- oder Lackschicht kann diese modifiziert sein. Beispiele hierfür sind physikalische Behandlungen mit Coronaentladung oder Plasma, Beschichtung mit haftvermittelnden Substanzen wie hydriertem Nitrilkautschuk, Vinylidenchloridpolymer oder solchen Haftvermittlern wie sie dem Fachmann für die Grundierung von Kunststoffteilen aus Polyolefinen (zum Beispiel Automobilstoßfänger) für nachfolgende Lackierungen bekannte sind. Weiterhin kann die Oberfläche zu diesem Zweck auch mit einer Folie wie zum Beispiel PVC, Polyester (PEN, PET) oder Polystyrol modifiziert sein.

Weiterhin ist in manchen Fällen eine Barriereschicht sinnvoll um Migration von Weichmacher aus der Plastisolschicht in die Korrosionsschutzschicht oder Migration von Weichmacher aus der Korrosionsschutzschicht in eine Lackschicht zu vermeiden. Dies kann zum Beispiel eine Beschichtung mit Vinylidenchloridpolymer oder Aufbringung einer Polyesterfolie sein.

Die erfindungsgemäße Schicht sollte eine Schichtdicke von mindestens 50 µm, vorzugsweise von mindestens 100 µm, besonders bevorzugt von mindestens 200 µm aufweisen. Zudem sollte die Schichtdicke maximal 750 µm, vorzugsweise maximal 600 µm, besonders bevorzugt maximal 400 µm betragen. Durch die Wahl der Schichtdicke wird sichergestellt, dass sowohl die Metalloberfläche beim Aufschmelzen der erfindungsgemäßen Schicht ausreichend bedeckt wird, aber andererseits die Schicht nicht ungleichmäßig verläuft (zum Beispiel zu stark fließt) und die Dicke der Korrosionsschutzschicht nicht zu groß wird.

Zur Anwendung hat es sich als besonders geeignet herausgestellt, dass das Klebeband zunächst auf einer Rolle aufgewickelt wird. Später kann es von dieser Rolle entnommen oder als Stanzling auf die Metalloberfläche aufgebracht werden.

Bei dem Verfahren wird die Schicht vorzugsweise bei mindestens 90 °C, besonders bevorzugt bei mindestens 110 °C und insbesondere bei mindestens 130 °C aufgeschmolzen.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Im Folgenden wird die Erfindung durch einige Beispiele näher erläutert ohne die Erfindung damit einschränken zu wollen.

### Rohstoffe der Beispiele:

- NOTIO PN-0040:: Copolymer aus Propylen und Buten-(1) (evtl. mit geringen Mengen auch an Ethylen), Schmelzindex 4 g/10min, Dichte 0,868 g/cm³, Biegemodul 42 MPa, Kristallitschmelzpunkt 159 °C, Schmelzwärme 5,2 J/g
- Softell CA02:: Copolymer aus Propylen und Ethylen, Schmelzindex 0,6 g/10min Dichte 0,870 g/cm³, Biegemodul 20 MPa, Kristallitschmelzpunkt 142 °C, Schmelzwärme 9,9 J/g
- PB 8640M:: Copolymer aus 1-Buten mit etwas Ethylen, Schmelzindex 1 g/10min, Dichte 0,906 g/cm³, Biegemodul 300 MPa, Kristallitschmelzpunkt 113 °C
- Vistamaxx 1100: Copolymer aus Propylen mit Ethylen, Schmelzindex 2 g/10min, Dichte 0,862 g/cm³, Biegemodul 13,6 MPa, Kristallitschmelzpunkt 161 °C
- LD 251:: LDPE, Schmelzindex 8 g/10min, Dichte 0,9155 g/cm³, Biegemodul 180 MPa, Kristallitschmelzpunkt 104 °C
- Engage 7467:: Copolymer aus Ethylen und Buten-(1), Schmelzindex 1,2 g/10mi Dichte 0,862 g/cm³, Biegemodul 4 MPa, Kristallitschmelzpunkt 34 °C
- Ondina 933:: Weißöl (paraffinisch-naphthenisches Mineralöl)
- Palatinol N: Diisononylphthalat
- Regalite R1100:: hydriertes aromatisches Kohlenwasserstoffharz, Schmelzpunkt 100 °C, Polydispersität 1,9
- Foral 85:: voll hydrierter Glycerinester des Kolophoniums mit einem Schmelzpunkt von 85 °C und einer Polydispersität von 1,2
- Irganox 1726:: phenolisches Antioxidans mit Schwefel-basierter Funktion eines sekundären Antioxidans

### Beispiel 1

Das Klebeband besteht aus einem Silikonpapier mit einer 300 µm dicken haftklebrigen Schmelzbeschichtung aus folgenden Komponenten:

| | |
|---|---|
| 100 phr | NOTIO PN-0040 |
| 200 phr | Regalite R1100 |
| 30 phr | Palatinol N |
| 1 phr | Irganox 1726 |

Das Klebeband wird in einer Breite von 20 mm über die Fuge von zwei sich 10 mm überlappenden KTL behandelten Stahlblechen von 0,5 mm Dicke geklebt und das Silikonpapier abgezogen.

Anschließend wird dieser Aufbau für 40 Minuten auf 170 °C erwärmt. Die Erwärmung führt zum Aufschmelzen der Polyolefinschicht auf die Metalloberfläche, so dass sich eine gleichmäßig verflossene Korrosionsschutzschicht ausbildet. Nach Abkühlen der Metallbleche zeigt die Korrosionsschutzschicht eine glatte Oberfläche. Dabei bleibt die Blechkante zwischen den beiden Metallblechen noch erkennbar, aber die Fuge ist komplett abgedichtet.

Anschließend werden die Metallbleche unterschiedlichen Umgebungsbedingungen ausgesetzt. Die Temperatur wird hierzu abwechselnd zwischen ca. -5 °C und 70 °C variiert. Die Korrosionsschutzschicht platzt aufgrund seiner dynamisch-mechanischen Eigenschaften trotz der wechselnden thermischen Ausdehnung nicht ab.

Weitere Bleche mit dieser Korrosionsschicht werden mit einem Radius von 200 mm gebogen. Die Korrosionsschutzschicht platzt dabei nicht ab.

Parallel wurden solche Bleche mit einem Unterbodenschutz-Plastisol auf Basis PVC und DINP versehen und 15 min bei 165 °C ausgehärtet. Die Plastisolschicht haftet auf dem Blech und auf der Korrosionsschutzschicht einwandfrei.

### Beispiel 2

Das Klebeband ist wie folgt aufgebaut:
- silikonisierte Polyesterfolie
- 40 µm Lösungsmittelacrylhaftklebemasse
- 250 µm Schmelzbeschichtung aus folgenden Komponenten:

| | |
|---|---|
| 100 phr | Softell CA02 |
| 200 phr | Regalite R1100 |
| 30 phr | Ondina 933 |
| 1 phr | Irganox 1726, |

- 1 µm PVDC-Copolymer (Saran F 310)

Das Klebeband wird nach Entfernung des Liners in einer Breite von 20 mm über die Fuge von zwei sich 10 mm überlappenden, KTL behandelten Stahlblechen von 0,5 mm Dicke geklebt und das Silikonpapier abgezogen.

Anschließend wird dieser Aufbau für 20 Minuten auf 165 °C erwärmt. Die Erwärmung führt zum Aufschmelzen der Polyolefinschicht auf die Metalloberfläche, so dass sich eine gleichmäßig verflossene Korrosionsschutzschicht ausbildet. Nach Abkühlen der Metallbleche zeigt die Korrosionsschutzschicht eine glatte Oberfläche. Dabei bleibt die Blechkante zwischen den beiden Metallblechen noch erkennbar aber die Fuge ist komplett abgedichtet.

Anschließend werden die Metallbleche unterschiedlichen Umgebungsbedingungen ausgesetzt. Die Temperatur wurde hierzu abwechselnd zwischen ca. -5 °C und 70 °C variiert. Die Korrosionsschutzschicht platzt aufgrund seiner dynamisch-mechanischen Eigenschaften trotz der wechselnden thermischen Ausdehnung nicht ab.

Weitere Bleche mit dieser Korrosionsschicht werden mit einem Radius von 200 mm gebogen. Die Korrosionsschutzschicht platzt dabei nicht ab.

Parallel werden solche Bleche mit einem 2-K-PU-Automobillack beschichtet und 10 min bei 140 °C getrocknet und ausgehärtet. Der Lack haftet auf dem Blech und auf der Korrosionsschutzschicht einwandfrei.

### Beispiel 3

Das Klebeband ist wie folgt aufgebaut:
- silikonisierte Polyesterfolie mit einer Dicke von 25 µm
- 40 µm Lösungsmittelacrylhaftklebemasse
- 250 µm Schmelzbeschichtung aus folgenden Komponenten:

| | |
|---|---|
| 100 phr | PB 8640M |
| 100 phr | Foral 85 |
| 1 phr | Irganox 1726, |

- 25 µm beidseitig geätzte PET-Folie

Die Prüfungen werden mit Ausnahme des Biegeversuches wie in Beispiel 2 durchgeführt und die Ergebnisse sind ebenfalls einwandfrei.

### Beispiel 4

Das Klebeband ist wie folgt aufgebaut:
- silikonisierte Polyesterfolie mit einer Dicke von 25 µm
- 40 µm Lösungsmittelacrylhaftklebemasse
- 250 µm Schmelzbeschichtung aus folgenden Komponenten:

| | |
|---|---|
| 100 phr | Vistamaxx 1100 |
| 100 phr | Regalite R1100 |
| 1 phr | Irganox 1726, |

- 25 µm beidseitig geätzte PET-Folie

Die Prüfungen werden mit Ausnahme des Biegeversuches wie in Beispiel 2 durchgeführt und die Ergebnisse sind ebenfalls einwandfrei.

### Vergleichsbeispiel 1

Die Ausführung erfolgt wie in Beispiel 1 beschrieben, jedoch mit LD 251 statt NOTIO PN-0040. Die Ausbildung der Korrosionsschutzschicht ist einwandfrei. Beim Wechselklimatest kommt es an den Enden der Korrosionsschutzschicht zu Ablösungserscheinungen. Beim Biegeversuch platzt die Korrosionsschutzschicht vollständig ab. Die Plastisolschicht haftet auf dem Blech einwandfrei, aber nicht auf der Korrosionsschutzschicht.

### Vergleichsbeispiel 2

Die Ausführung erfolgt wie in Beispiel 1 beschrieben, jedoch mit Engage 7467 statt NOTIO PN-0040. Die Ausbildung der Korrosionsschutzschicht ist unvollständig und ungleichmäßig dick. An der oberen Kante der Fuge ist die Korrosionsschutzschicht teilweise abgelaufen. Beim Biegeversuch platzt die Korrosionsschutzschicht vollständig ab. Die Plastisolschicht haftet auf dem Blech einwandfrei aber nicht auf der Korrosionsschutzschicht.

## Patentansprüche

1. Verfahren zur Korrosionsschutzbehandlung von Metalloberflächen, insbesondere an Kanten und Übergängen der Metallbauteile,
**dadurch gekennzeichnet, dass**
auf die Metalloberfläche ein Klebeband mit einer Schicht aus einem Olefinpolymer mit einer Dichte zwischen 0.86 und 0,91 g/cm³ und einem Kristallitschmelzpunkt von mindestens 105 °C aufgebracht wird und das Klebeband derart erwärmt wird, dass die Schicht aufgeschmolzen wird und sich so eine Korrosionsschutzschicht ausbildet.

2. Verfahren nach Anspruch 1,
**dadurch gekennzeichnet, dass**
die Dichte des Olefinpolymers zwischen 0,86 und 0,88 g/cm³, bevorzugt zwischen 0,86 und 0,87 g/cm³ liegt und/oder das Olefinpolymer einen Kristallitschmelzpunkt von mindestens 105 °C, vorzugsweise mindestens 115 °C, besonders bevorzugt mindestens 135 °C aufweist.

3. Verfahren nach Anspruch 1 oder 2,
**dadurch gekennzeichnet, dass**
das Olefinpolymer einen Schmelzindex von weniger als 8 g/10 min, vorzugsweise weniger als 1,5 g/10 min aufweist,
einen Biegemodul von weniger als 50 MPa, vorzugsweise weniger als 26 MPa und insbesondere weniger als 17 MPa aufweist.

4. Verfahren nach zumindest einem der vorherigen Ansprüche,
**dadurch gekennzeichnet, dass**
das Olefinpolymer Ethylen oder Propylen und mindestens einem weiteren Comonomer ausgewählt den C₂- bis C₁₀-Olefinen vorzugsweise C₂- bis C₁₀-α-Olefinen enthält besonders bevorzugt ein Copolymer aus Ethylen und Propylen, Ethylen und Buten-(1), Ethylen und Octen-(1), Propylen und Buten-(1) oder ein Terpolymer aus Ethylen, Propylen und Buten-(1) ist.

5. Verfahren nach zumindest einem der vorherigen Ansprüche,
**dadurch gekennzeichnet, dass**
das Olefinpolymer ein Blockcopolymer, ein Pfropfpolymer oder ein heterophasisches Polymer auf Basis Polypropylen ist.

6. Verfahren nach zumindest einem der vorhergehenden Ansprüche,
**dadurch gekennzeichnet, dass**
die Dicke der Schicht zwischen 50 und 750 µm, vorzugsweise zwischen 100 und 600 µm, besonders bevorzugt zwischen 200 und 400 µm beträgt.

7. Verfahren nach zumindest einem der vorhergehenden Ansprüche,
**dadurch gekennzeichnet, dass**
die Oberfläche der Korrosionsschutzschicht dahingehend modifiziert ist, dass eine ausreichende Haftung zu einer nachträglich aufgebrachten Plastisol- oder Lackschicht sichergestellt ist.

8. Verfahren nach zumindest einem der vorhergehenden Ansprüche,
**dadurch gekennzeichnet, dass**
die Schicht bei mindestens 90 °C, vorzugsweise bei mindestens 110 °C, weiter vorzugsweise bei mindestens 130 °C aufgeschmolzen wird.

9. Verfahren nach zumindest einem der vorhergehenden Ansprüche,
**dadurch gekennzeichnet, dass**
die Schicht haftklebrig ist.

10. Verfahren nach zumindest einem der vorhergehenden Ansprüche,
**dadurch gekennzeichnet, dass**
sich zwischen der Schicht und der Metalloberfläche eine Haftklebemasse befindet.

## Claims

1. Method for the corrosion control treatment of metal surfaces, especially on edges and transitions of the metal components,
**characterized in that**
applied to the metal surface is an adhesive tape having a layer of an olefin polymer having a density of between 0.86 and 0.91 g/cm³ and a crystallite melting point of at least 105°C, and the adhesive tape is heated such that the layer is melted and thus a corrosion control layer is formed.

2. Method according to Claim 1,
**characterized in that**
the density of the olefin polymer is between 0.86 and 0.88 g/cm³, preferably between 0.86 and 0.87 g/cm³, and/or the olefin polymer has a crystallite melting point of at least 105°C, preferably at least 115°C, more preferably at least 135°C.

3. Method according to Claim 1 or 2,
**characterized in that**
the olefin polymer has a melt index of less than 8 g/10 min, preferably less than 1.5 g/10 min,
a flexural modulus of less than 50 MPa, preferably less than 26 MPa, and more particularly less than 17 MPa.

4. Method according to at least one of the preceding claims,
**characterized in that**
the olefin polymer comprises ethylene or propylene and at least one further comonomer selected from the C₂ to C₁₀ olefins, preferably C₂ to C₁₀ α-olefins, and more preferably is a copolymer of ethylene and propylene, ethylene and but-1-ene, ethylene and oct-1-ene, propylene and but-1-ene, or a terpolymer of ethylene, propylene, and but-1-ene.

5. Method according to at least one of the preceding claims,
**characterized in that**
the olefin polymer is a block copolymer, a graft polymer or a heterophase polymer based on polypropylene.

6. Method according to at least one of the preceding claims,
**characterized in that**
the thickness of the layer is between 50 and 750 µm, preferably between 100 and 600 µm, more preferably between 200 and 400 µm.

7. Method according to at least one of the preceding claims,
**characterized in that**
the surface of the corrosion control layer has been modified to ensure sufficient adhesion to a subsequently applied plastisol layer or paint layer.

8. Method according to at least one of the preceding claims,
**characterized in that**
the layer is melted at not less than 90°C, preferably at not less than 110°C, more preferably at not less than 130°C.

9. Method according to at least one of the preceding claims,
**characterized in that**
the layer is pressure-sensitively adhesive.

10. Method according to at least one of the preceding claims,
**characterized in that**
a pressure-sensitive adhesive is located between the layer and the metal surface.

## Revendications

1. Procédé pour le traitement anticorrosion de surfaces métalliques, en particulier au niveau d'arêtes et de jonctions des pièces métalliques de construction,
**caractérisé**
**en ce qu'**on applique sur la surface métallique un ruban adhésif comportant une couche d'un polymère d'oléfine ayant une densité comprise entre 0,86 et 0,91 g/cm³ et un point de fusion de cristallite d'au moins 105 °C et on chauffe le ruban adhésif de sorte que la couche est fondue et ainsi se forme une couche anticorrosion.

2. Procédé selon la revendication 1,
**caractérisé en ce que**
la densité du polymère d'oléfine est comprise entre 0,86 et 0,88 g/cm³, de préférence entre 0,86 et 0,87 g/cm³ et/ou le polymère d'oléfine présente un point de fusion de cristallite d'au moins 105 °C, de préférence d'au moins 115 °C, de façon particulièrement préférée d'au moins 135 °C.

3. Procédé selon la revendication 1 ou 2,
**caractérisé en ce que**
le polymère d'oléfine présente un indice de fluidité à chaud de moins de 8 g/10 min, de préférence de moins de 1,5 g/10 min,
un module de flexion inférieur à 50 MPa, de préférence inférieur à 26 MPa et en particulier inférieur à 17 MPa.

4. Procédé selon au moins l'une quelconque des revendications précédentes,
**caractérisé en ce que**
le polymère d'oléfine contient de l'éthylène ou du propylène et au moins un autre comonomère choisi parmi les oléfines en C₂-C₁₀, de préférence les α-oléfines en C₂-C₁₀, de façon particulièrement préférée est un copolymère d'éthylène et propylène, éthylène et butène-(1), éthylène et octène-(1), propylène et butène-(1) ou un terpolymère d'éthylène, propylène et butène-(1).

5. Procédé selon au moins l'une quelconque des revendications précédentes,
**caractérisé en ce que**
le polymère d'oléfine est un copolymère séquencé, un polymère greffé ou un polymère hétérophasique à base de polypropylène.

6. Procédé selon au moins l'une quelconque des revendications précédentes,
**caractérisé en ce que**
l'épaisseur de la couche est comprise entre 50 et 750 µm, de préférence entre 100 et 600 µm, de façon particulièrement préférée entre 200 et 400 µm.

7. Procédé selon au moins l'une quelconque des revendications précédentes,
**caractérisé en ce que**
la surface de la couche anticorrosion est modifiée de manière que soit assurée une adhérence suffisante à une couche de peinture ou de plastisol appliquée ultérieurement.

8. Procédé selon au moins l'une quelconque des revendications précédentes,
**caractérisé**
**en ce qu'**on fait fondre la couche à au moins 90 °C, de préférence à au moins 110 °C, encore mieux à au moins 130 °C.

9. Procédé selon au moins l'une quelconque des revendications précédentes,
**caractérisé en ce que**
la couche est autoadhésive.

10. Procédé selon au moins l'une quelconque des revendications précédentes,
**caractérisé**
**en ce qu'**une matière autoadhésive se trouve entre la couche et la surface métallique.
